# EUROPÄISCHE PATENTSCHRIFT

(11) **EP 0 817 137 B1**
(45) Veröffentlichungstag und Bekanntmachung des Hinweises auf die Patenterteilung: **24.10.2001**
(21) Anmeldenummer: 97111098.6
(22) Anmeldetag: 03.07.1997
(51) Int. Cl.: G07F 7/06, B62B 3/14

(54) **Schiebegriff**
Handle bar
Barre de manoeuvre

(30) Priorität: 04.07.1996 DE 29611679 U
(43) Veröffentlichungstag der Anmeldung: 07.01.1998
(73) Patentinhaber: WANZL METALLWARENFABRIK GMBH, D-89336 Leipheim (DE)
(72) Erfinder: Eberlein, Herbert, 89347 Bubesheim (DE)

(56) Entgegenhaltungen:
- EP-A- 0 537 404
- WO-A-91/06930
- WO-A-95/34053
- DE-A- 4 206 606
- DE-U- 9 308 624
- DE-U- 9 315 684
- DE-U- 29 508 411
- FR-A- 2 592 198

## Beschreibung

Die Erfindung betrifft einen Schiebegriff zum Anordnen an einem Transportwagen, mit einem Greifbereich und mit einem Befestigungsbereich, der zum Befestigen des Schiebegriffes am Transportwagen bestimmt ist, wobei zwischen dem Greifbereich und dem Befestigungsbereich ein Quersteg angeordnet ist, der mit einer Einrichtung zum Tragen einer Kopplungseinrichtung ist und die Kopplungseinrichtung mit Hilfe eines Verriegelungsteiles an der Kopplungseinrichtung eines weiteren Transportwagens ankoppelbar ist.

Schiebegriffe dieser Art werden an Holmen eines Transportwagens befestigt. Die Schiebegriffe weisen einen Greifbereich auf, an dem sich in geeignetem Abstand ein Befestigungsbereich anschließt, der zur Befestigung des Schiebegriffes an den Holmen des Transportwagens dient. Gewöhnlich werden diese Transportwagen mit Kopplungseinrichtungen, wie z.B. in der DE 39 12 831 A1 beschrieben, ausgestattet, um ein geordnetes Bereitstellen der Transportwagen in Märkten zu ermöglichen. Bisher werden diese Kopplungseinrichtungen an dem den Greifbereich vom Befestigungsbereich trennenden Quersteg aufgesetzt.
In der DE 295 08 411.1 wird ein solcher Schiebegriff beschrieben. Zur Befestigung der Kopplungseinrichtung ist am Quersteg ein Aufsetzbereich gebildet, an welchem die Kopplungseinrichtung angebracht ist. Dabei wird bei einem ersten Ausführungsbeispiel vorgeschlagen, am Quersteg einen Vorsprung anzuformen, auf dem die Kopplungseinrichtung seitlich aufsteckbar ist. Ein weiteres Ausführungsbeispiel offenbart eine seitlich angeordnete Vertiefung, in welche ein Teil des Volumens einer Kopplungseinrichtung einsetzbar ist. Schließlich wird als drittes Ausführungsbeispiel vorgeschlagen, am Quersteg einen Durchbruch vorzusehen, in welchen ein zum Tragen einer Kopplungseinrichtung bestimmter Bundbolzen einsetzbar ist. Die vorgeschlagenen Lösungen sind aufwendig und daher teuer. Ferner steht bei allen angeführten Lösungen die Kopplungseinrichtung vom Transportwagen nach außen seitlich weg, so daß man beim Gebrauch der Transportwagen mit der Kopplungseinrichtung an Hindernisse anfahren kann. Dies führt zu Beschädigungen.

Die Aufgabe der Erfindung besteht darin, einen gattungsgemäßen Schiebegriff so weiterzuentwickeln, daß die vorab genannten Nachteile vermeidbar sind.

Als Lösung wird vorgeschlagen, die Einrichtung als Raum zu gestalten, in welchem die Kopplungseinrichtung angeordnet ist, wobei der Raum mit einer ersten Öffnung zum Einführen der Kopplungseinrichtung und mit einer zweiten Öffnung zum Einführen des Verriegelungsteiles der Kopplungseinrichtung des weiteren Transportwagens ausgestattet ist.

Die vorgeschlagenen Lösung ermöglicht ein platzsparendes Einbinden einer Kopplungseinrichtung in den Schiebegriff, so daß das seitliche Wegragen der Kopplungseinrichtung vom Schiebegriff vermieden wird. Durch Anfahren bedingte Beschädigungen an der Kopplungseinrichtung oder an sonstigen Gegenständen sind ausgeschlossen. Ein weiterer Vorteil ergibt sich dann, wenn sich der Raum in einer vom Quersteg ausgehenden Ausbuchtung befindet, die am Schiebegriff so vorgesehen ist, daß sie als Anlagefläche für auf einem Transportwagen abstellbare Gegenstände geeignet ist.

Die EP 0 537 404 beschreibt einen Schiebegriff für einen Einkaufswagen, der sich nahezu über die gesamte Breite des Einkaufswagens erstreckt. Die Kopplungseinrichtung ist hierbei innerhalb eines vom Griff getrennten Gehäuses angeordnet. Dieses Gehäuse wird in einen im Griff befindlichen Aufnahmeraum eingeführt und in demselben durch Haltemittel entfernbar zurückgehalten. Zur Verbindung des Griffes mit der Kopplungseinrichtung werden zusätzliche Haltemittel benötigt. Die genannte Patentschrift gibt keine Hinweise darüber, wie eine Kopplungseinrichtung an einem gattungsgemäßen Schiebegriff auf zweckmäßige Art anzubringen wäre.

Anhand eines Ausführungsbeispieles wird die Erfindung ausführlicher beschrieben. Es zeigt:
Fig. 1 einen Schiebegriff mit integrierter Kopplungseinrichtung;
Fig. 2 eine Seitenansicht eines Schiebegriffes an einem Transportwagen sowie
Fig. 3 einen Transportwagen mit Schiebegriff.

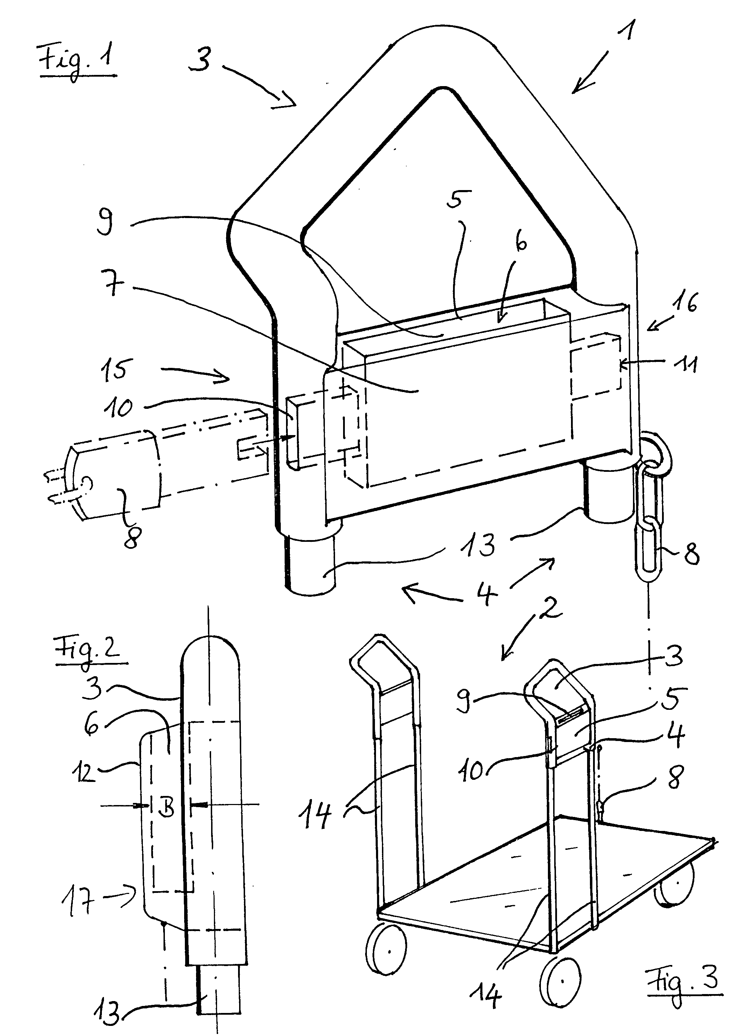

Fig. 1 zeigt einen Schiebegriff 1 zum paarweisen Anordnen an einem Transportwagen 2, mit einem Greifbereich 3 und einem Befestigungsbereich 4. Der Befestigungsbereich 4 wird durch zwei nach unten gerichtete Zapfen gebildet, die in die rohrförmigen Holme 14 des Transportwagens 2 zur Befestigung eingesetzt werden. Zwischen dem bogenförmigen Greifbereich 3 und dem Befestigungsbereich 4 ist zur Stabilisierung ein Quersteg 5 angeformt. Der Quersteg 5 weist einen Raum 6 auf, der zur Aufnahme einer bevorzugt als Baueinheit gestalteten Kopplungseinrichtung 7 bestimmt ist. Zur Kopplungseinrichtung 7 zählt ein Verriegelungsteil 8, das an der Kopplungseinrichtung 7 oder von dieser getrennt, am Schiebegriff 1 oder nahe des Schiebegriffes 1 an einem Transportwagen 2 angeordnet ist. Kopplungseinrichtungen 7 sind z.B. durch die EP 0 537 404 A1 bekannt und brauchen deshalb hier weder von ihrem Aufbau her, noch bezüglich ihrer Funktionsweise näher beschrieben zu werden. Zur Fixierung der Kopplungseinrichtung 7 im Raum 6 sind beispielsweise nicht näher dargestellte Führungshilfen vorgesehen oder angeformt, die ein Einrasten der Kopplungseinrichtung 7 bewirken. Als erste Lösung zur Einbringung der Kopplungseinrichtung 7 in den Raum 6 ist eine obere erste Öffnung 9 vorgesehen, die zum Einführen der Kopplungseinrichtung 7 von oben her zugänglich ist und beispielsweise zusätzlich mit einem Deckel verschlossen werden kann. An der Rückseite 15 des Schiebegriffes 1 ist eine zweite Öffnung 10 zum Einführen des Verriegelungsteiles 8 einer Kopplungseinrichtung 7 vorgesehen, die einem weiteren Transportwagen 2 angehört. Die Eingabe des Pfandes für die Kopplungseinrichtung 7 kann von oben durch die erste Öffnung 9 oder durch eine weitere dritte Öffnung 11, die sich vorn am Schiebegriff 1 befindet, erfolgen. Die horizontal gemessene Breite B des Raumes 6, vgl. Fig. 2, ist größer als die in gleicher Richtung horizontal gemessenen Breiten der zweiten Öffnung 11.
Als weitere Lösung ist auch der Einschub der Kopplungseinrichtung 7 durch eine Öffnung 10, 11 von vorne oder hinten möglich, doch sind hier zusätzliche Befestigungsmittel erforderlich, damit beim An- und Entkoppeln die Kopplungseinrichtung 7 nicht aus dem Raum 6 im Quersteg 5 herausdrückt oder -gezogen wird. Das Verriegelungsteil 8 ist an der Kopplungseinrichtung 7 direkt, oder wie gezeichnet, am Schiebegriff 1 befestigt. Ist das Verriegelungsteil 8 direkt an der Kopplungseinrichtung 7 befestigt, muß das Verriegelungsteil 8 beim Einbringen der Kopplungseinrichtung 7 in den Raum 6 durch die dritte Öffnung 11 nach außen geführt werden, wobei dann für die Einführung des Pfandes eine andere Öffnung gewählt werden muß. Die zweite Öffnung 10 kann auch an der Vorderseite 16 des Schiebegriffes 1 und die dritte Öffnung 11 entgegengesetzt an der Rückseite 15 des Schiebegriffes 1 vorgesehen sein. Entsprechend entgegengesetzt ist dann auch das Verriegelungsteil 8 angeordnet.

Fig. 2 zeigt eine Seitenansicht eines Schiebegriffes 1. Der Quersteg 5 weist eine seitliche Ausbuchtung 12 auf, in welcher sich der Raum 6 für die Kopplungseinrichtung 7 befindet. Die seitliche Ausbuchtung 12 ist sehr gut als Anlage für auf dem Transportwagen 2 hochkant abgestelltes plattenförmiges Gut geeignet. Aus diesem Grund ist die Ausbuchtung 12 an der Innenseite 17, also an jener Seite des Schiebegriffes 1 vorgesehen, die zum gegenüberliegenden Schiebegriff 1 weist.

Fig. 3 zeigt zur Verdeutlichung des Gebrauchs der Erfindung einen Transportwagen 2 mit zwei Schiebegriffen 1. Am Transportwagen 2 ist ein Schiebegriff 1 angeordnet, der mit einer Kopplungseinrichtung 7 ausgestattet ist und ein zweiter Schiebegriff 1, der keine Kopplungseinrichtung 7 aufweist.

## Patentansprüche

1. Schiebegriff (1) zum Anordnen an einem Transportwagen (2), mit einem Greifbereich (3) und mit einem Befestigungsbereich (4), der zum Befestigen des Schiebegriffes (1) am Transportwagen (2) bestimmt ist wobei zwischen dem Greifbereich (3) und dem Befestigungsbereich (4) ein Quersteg (5) angeordnet ist, der mit einer Einrichtung zum Tragen einer Kopplungseinrichtung (7) ausgestattet ist und die Kopplungseinrichtung (7) mit Hilfe eines Verriegelungsteiles (8) an der Kopplungseinrichtung (7) eines weiteren Transportwagens (2) ankoppelbar ist, **dadurch gekennzeichnet, dass** die Einrichtung als Raum (6) gestaltet ist, in welchem die Kopplungseinrichtung (7) angeordnet ist, wobei der Raum (6) mit einer ersten Öffnung (9) zum Einführen der Kopplungseinrichtung (7) und mit einer zweiten Öffnung (10) zum Einführen des Verriegelungsteiles (8) der Kopplungseinrichtung (7) des weiteren Transportwagens (2) ausgestattet ist.

2. Schiebegriff (1) nach Anspruch 1, **dadurch gekennzeichnet, dass** die erste Öffnung (9) von oben her zugänglich ist.

3. Schiebegriff (1) nach Anspruch 1 oder 2, **dadurch gekennzeichnet, dass** der Raum (6) eine dritte Öffnung (11) aufweist, durch die das für die Kopplungseinrichtung (7) bestimmte Pfand einführbar und entnehmbar ist.

4. Schiebegriff (1) nach Anspruch 1, **dadurch gekennzeichnet, dass** die erste Öffnung (9) zum Einführen oder zur Entnahme des für die Kopplungseinrichtung (7) bestimmten Pfandes vorgesehen ist.

5. Schiebegriff (1) nach einem der Ansprüche 1 bis 4, **dadurch gekennzeichnet, dass** das Verriegelungsteil (8) der Kopplungseinrichtung (7) durch die dritte Öffnung (11) hindurchführbar ist.

6. Schiebegriff (1) nach einem der Ansprüche 1 bis 5, **dadurch gekennzeichnet, dass** der Raum (6) in einer am Quersteg (5) befindlichen Ausbuchtung (12) vorgesehen und die Ausbuchtung (12) als Anlagefläche für auf einem Transportwagen (2) abstellbare Gegenstände geeignet ist.

7. Schiebegriff(1) nach einem Ansprüche 1 bis 6, **dadurch gekennzeichnet, dass** die Ausbuchtung (12) an der Innenseite des Schiebegriffes (1) vorgesehen ist.

8. Schiebegriff (1) nach einem der Ansprüche 1 bis 7, **dadurch gekennzeichnet, dass** die horizontal gemessene Breite B des Raumes (6) größer ist als die in gleicher Richtung horizontal gemessenen Breiten der zweiten (10) und dritten Öffnung (11).

## Claims

1. A handle (1) for arrangement on a trolley (2), comprising a gripping region (3) and a fixing region (4) for fixing the handle (1) to the trolley (2), wherein a crosspiece (5) is arranged between the gripping region (3) and the fixing region (4) and is provided with an arrangement for carrying a coupling device (7), and the coupling device (7) is connectable to the coupling device (7) of a further trolley (2) by means of a locking member (8), **characterised in that** the arrangement is formed as a chamber (6) in which the coupling device (7) is arranged, the chamber (6) being provided with a first opening (9) for insertion of the coupling device (7) and with a second opening (10) for insertion of the locking member (8) of the coupling device (7) of the further trolley (2).

2. A handle (1) according to claim 1, **characterised in that** the first opening (9) is accessible from above.

3. A handle (1) according to claim 1 or 2, **characterised in that** the chamber (6) has a third opening (11), through which the deposit for the coupling device (7) is insertable and removable.

4. A handle (1) according to claim 1, **characterised in that** the first opening (9) is provided for the insertion or removal of the deposit for the coupling device (7).

5. A handle (1) according to any one of claims 1 to 4, **characterised in that** the locking member (8) of the coupling device (7) is insertable through the third opening (11).

6. A handle (1) according to any one of claims 1 to 5, **characterised in that** the chamber (6) is provided in a projection (12) on the crosspiece (5), and the projection (12) is suitable as a supporting surface for objects placeable on a trolley (2).

7. A handle (1) according to any one of claims 1 to 6, **characterised in that** the projection (12) is provided on the inside of the handle (1).

8. A handle (1) according to any one of claims 1 to 7, **characterised in that** the horizontally measured width B of the chamber (6) is greater than the widths of the second (10) and third (11) openings measured horizontally in the same direction.

## Revendications

1. Barre de manoeuvre (1) conçue pour être installée sur un chariot de transport (2), comprenant une zone de préhension (3) et une zone de fixation (4) destinée à la fixation de la barre de manoeuvre (1) sur le chariot de transport (2), une membrure d'entretoisement (5), interposée entre la zone de préhension (3) et la zone de fixation (4), étant équipée d'un système de support d'un dispositif d'accouplement (7), et ledit dispositif d'accouplement (7) pouvant être accouplé, à l'aide d'une pièce de verrouillage (8), au dispositif d'accouplement (7) d'un autre chariot de transport (2), **caractérisée par le fait que** ledit système revêt la forme d'une cavité (6) dans laquelle le dispositif d'accouplement (7) est logé, ladite cavité (6) étant munie d'un premier orifice (9) pour l'introduction du dispositif d'accouplement (7), et d'un deuxième orifice (10) pour l'introduction de la pièce de verrouillage (8) du dispositif d'accouplement (7) de l'autre chariot de transport (2).

2. Barre de manoeuvre (1) selon la revendication 1, **caractérisée par le fait que** le premier orifice (9) est accessible de haut en bas.

3. Barre de manoeuvre (1) selon la revendication 1 ou 2, **caractérisée par le fait que** la cavité (6) présente un troisième orifice (11) à travers lequel le jeton de consigne, destiné au dispositif d'accouplement (7), peut être inséré et prélevé.

4. Barre de manoeuvre (1) selon la revendication 1, **caractérisée par** lé fait que le premier orifice (9) est prévu pour l'insertion ou pour le prélèvement du jeton de consigne destiné au dispositif d'accouplement (7).

5. Barre de manoeuvre (1) selon l'une des revendications 1 à 4, **caractérisée par le fait que** la pièce de verrouillage (8) du dispositif d'accouplement (7) peut être introduite à travers le troisième orifice (11).

6. Barre de manoeuvre (1) selon l'une des revendications 1 à 5, **caractérisée par le fait que** la cavité (6) est prévue dans une indentation (12) située sur la membrure d'entretoisement (5), et ladite indentation (12) se prête en tant que reposoir pour des objets pouvant être déposés sur un chariot de transport (2).

7. Barre de manoeuvre (1) selon l'une des revendications 1 à 6, **caractérisée par le fait que** l'indentation (12) est prévue à la face interne de ladite barre de manoeuvre (1).

8. Barre de manoeuvre (1) selon l'une des revendications 1 à 7, **caractérisée par le fait que** la largeur B de la cavité (6), mesurée horizontalement, est plus grande que les largeurs des deuxième (10) et troisième (11) orifices, mesurées horizontalement dans la même direction.
